(19) Europäisches Patentamt
European Patent Office
Office européen des brevets

(11) **EP 1 848 090 A2**

(12) **DEMANDE DE BREVET EUROPEEN**

(43) Date de publication:
**24.10.2007 Bulletin 2007/43**

(51) Int Cl.:
*H02J 7/14* (2006.01)        *H02J 7/32* (2006.01)

(21) Numéro de dépôt: **07300850.0**

(22) Date de dépôt: **06.03.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **21.03.2006 FR 0650968**

(71) Demandeur: **Peugeot Citroen Automobiles SA**
**78943 Vélizy-Villacoublay Cedex (FR)**

(72) Inventeur: **Carubelli, I Stéphane**
**94450, CHEVILLY LARUE (FR)**

(74) Mandataire: **Vigand, Régis Louis Michel et al**
**PEUGEOT CITRÖEN AUTOMOBILES SA.**
**18, Rue des Fauvelles**
**92250 La Garenne Colombes (FR)**

(54) **Dispositif de suralimentation temporaire en puissance d'organes électriques**

(57)      - Le dispositif (5) est destiné à un réseau de bord électrique de véhicule comprenant une source d'énergie électrique principale et au moins un organe électrique de forte puissance activé pendant de courtes périodes de temps

- le dispositif (5) comporte des éléments de stockage d'énergie électrique rechargeables (SC$_1$, SC$_2$), un moyen pour passer d'un premier état, dans lequel l'organe de forte puissance est alimenté directement par le réseau de bord et lesdits éléments de stockage d'énergie électrique rechargeables (SC$_1$, SC$_2$) peuvent être rechargés par la source d'énergie électrique principale (2), à un second état, dans lequel, pendant lesdites courtes périodes de temps, l'organe de forte puissance est alimenté avec une puissance supérieure à celle délivrée dans le premier état.

- Véhicules automobiles. Réseaux électriques de bord des véhicules automobiles.

**FIG.3**

**EP 1 848 090 A2**

**Description**

La présente invention concerne un dispositif de suralimentation temporaire en puissance d'organes électriques automobiles. Elle concerne, en particulier, un dispositif permettant de suralimenter temporairement en puissance un organe électrique automobile de forte puissance lorsque la demande énergétique de la part de ce dernier est importante et lorsque la tension à ses bornes est trop faible ou encore lorsque la source d'énergie principale est défaillante.

L'organe de forte puissance peut être, par exemple, un organe électrique de type « liaison au sol » dont il faut augmenter la tension aux bornes dans certaines phases de vie critiques, telles que la fin de braquage d'une direction assistée électrique (DAE), par exemple. Dans cette phase, il faut également préserver la qualité du réseau de bord automobile et les autres organes électriques consommateurs associés.

Le réseau de bord d'un véhicule automobile se compose, de manière générale, d'une source d'énergie électrique (alternateur), d'un élément de stockage de l'énergie électrique (batterie), de différents organes électriques branchés sur le réseau, parmi lesquels un ou plusieurs desdits organes de forte puissance, et de faisceaux qui font le lien entre tous ces éléments.

Lors de certaines phases de fonctionnement, par exemple comme évoqué précédemment en butée au braquage pour une direction assistée électronique, ces organes électriques de forte puissance atteignent les limites de ce que peut fournir le réseau de bord. Il en résulte une dégradation de la prestation de l'organe électrique et une surcharge en puissance du réseau de bord.

Différentes solutions ont été apportées pour intervenir sur le réseau de bord.

Selon la demande de brevet européen EP 1 120 880 A2, au nom de la société TOYOTA JIDOSHA KABUSHIKI KAISHA, on connaît un circuit pour alimenter en puissance électrique un consommateur d'énergie en utilisant une batterie haute tension. Il comprend deux convertisseurs DC/DC, un principal et un auxiliaire, pour alimenter à partir d'un réseau de bord automobile des consommateurs basse tension et des mémoires, sans décharger la batterie. Quand un bouton d'allumage est en position « off », le convertisseur principal est éteint et l'alimentation provient du convertisseur auxiliaire. Quand le bouton d'allumage est en position « on », l'alimentation vient du convertisseur principal.

On connaît également, selon la publication de la demande de brevet PCT WO 99/44269 au nom de la société LUCAS INDUSTRIES PLC, un circuit pour alimenter en tension une unité de commande électronique (microprocesseur) dans un véhicule automobile, ledit circuit étant du type qui utilise un condensateur pour stocker l'énergie et étant utilisé pour maintenir l'alimentation lors d'interruptions d'alimentation temporaires. Une pompe de charge est prévue pour augmenter la tension disponible dans la charge du condensateur à un niveau supérieur à celui de l'alimentation : il s'agit de « booster » l'énergie emmagasinée du condensateur.

Ces circuits connus de l'art antérieur n'assurent pas la fonction recherchée de suralimentation en puissance dans certaines phases de vie d'un organe de forte puissance. De plus, ils ne comportent pas de moyen de stockage d'énergie électrique supplémentaire.

D'autres dispositifs connus sont destinés à intervenir sur un réseau de bord automobile.

La publication de demande de brevet d'invention des Etats-Unis d'Amérique US 2002/0140293 A1 décrit une alimentation de secours pour un module de commande. Elle comporte une source d'énergie principale qui est reliée à un circuit de charge d'une source d'énergie de secours. Un circuit de commande de convertisseur survolteur (« boost ») est relié à la source d'énergie principale et à la source de secours de telle manière que ledit circuit de commande de convertisseur commande la charge de la source de secours avec la source principale en fonctionnement normal. Un circuit de commande d'alimentation de secours est relié à un dispositif de commutation de source de secours. Ledit circuit de commande d'alimentation de secours réalise la commutation de source d'énergie de la source principale à celle de secours lorsque le circuit de commande d'alimentation de secours détecte une perte de puissance de la source d'énergie principale.

Le brevet d'invention des Etats-Unis d'Amérique US 4 145 618, au nom de la société WABCO Westinghouse, décrit un système d'alimentation haute tension d'un convertisseur statique. Un circuit secondaire fournit une source d'énergie de secours ou de réserve pour assurer le fonctionnement du convertisseur statique pendant des périodes d'interruption. Dans le circuit secondaire, il est prévu une capacité qui est normalement chargée à partir de la source de puissance par l'intermédiaire d'une résistance dont la valeur ohmique garantit une charge relativement lente de manière à éviter que le fusible d'entrée saute dans le cas d'un court circuit dans la capacité du circuit secondaire avec un régime à tension réduite. Un dispositif à diodes relie la réserve d'énergie emmagasinée au convertisseur statique.

La demande de brevet d'invention PCT WO 2004/070911 A1, au nom de la société SIEMENS A.G., décrit un dispositif permettant d'alimenter un système électrique de véhicule à deux tensions. Il comprend un alterno-démarreur qui est couplé mécaniquement à un moteur à combustion interne, un condensateur à double couche, un premier accumulateur et un second accumulateur. Des composants de sécurité peuvent être alimentés en puissance par l'intermédiaire de trois relais de sécurité alternativement à partir de l'alterno-démarreur, du condensateur à double couche ou à partir du premier ou du second accumulateur.

Comme les précédents systèmes de l'art antérieur mentionnés plus avant dans le texte, ces différents dispositifs ou circuits ne permettent pas de suralimenter temporairement un organe de forte puissance. De plus, les deux sources d'énergie présentes ne sont jamais connectées en série, et de plus pour la dernière demande de brevet citée, à savoir WO 2004/070911 A1, les paramètres de charge ou de recharge de l'élément de stockage d'énergie secondaire n'évoluent pas en fonction du système.

Enfin, selon le brevet d'invention français n° 2 687 511 au nom de la société VOLKSWAGENWERK A.G., on connaît un procédé de réglage ou de commande de la tension d'un réseau de bord de véhicule automobile, lequel réseau de bord comprenant en service au moins un organe électrique à forte consommation du type démarreur de moteur à combustion interne, et des organes électriques à consommation plus faible du type circuit d'éclairage, et un générateur pouvant alimenter une batterie principale du véhicule. Dans ce procédé, la vitesse des variations de la tension du réseau de bord disponible pour les organes à consommation plus faible est limitée en fonction du branchement et de la coupure des utilisateurs et/ou du générateur. La tension du réseau de bord est alors tirée sur une batterie auxiliaire qui est coupée de la batterie principale. Lorsque le moteur à combustion interne tourne, la batterie principale et la batterie auxiliaire sont branchées en parallèle et alimentées par le générateur. Après coupure du moteur, la batterie principale et la batterie auxiliaire demeurent branchées en parallèle et, pour le démarrage du moteur au moyen de la batterie principale, la batterie auxiliaire est coupée de la batterie principale et branchée pour l'alimentation du réseau de bord.

Mais dans ce procédé de l'art antérieur, la « suralimentation » du réseau de bord ne s'applique que pour des organes sensibles et seulement dans le cas d'un démarrage du moteur thermique ou d'une phase à allumage par compression.

Le but de la présente invention est d'obvier aux inconvénients des systèmes et circuits précités de l'art antérieur, en réalisant un nouveau dispositif qui permette de fournir une suralimentation temporaire à des organes électriques automobiles de forte puissance dans certaines phases de leur vie au cours desquelles la consommation d'énergie peut être très élevée, et qui permette de fournir, en particulier, une suralimentation temporaire en puissance à des organes électriques automobiles de type « liaison au sol », ces derniers étant contraints dans certaines phases de leur fonctionnement de délivrer une puissance mécanique très importante.

Un autre but de la présente invention est de réaliser un nouveau dispositif de suralimentation temporaire en puissance, qui permette d'assurer une alimentation de secours pour les organes de forte puissance dans le cas d'une défaillance de l'alimentation principale.

C'est également un but de la présente invention de réaliser un nouveau dispositif de suralimentation temporaire en puissance, qui permette d'assurer la qualité de tension du réseau de bord lors de l'activation d'un organe de forte puissance, ainsi que pendant la charge et la recharge des éléments de stockage d'énergie électrique rechargeables secondaires.

Ainsi, un but important de la présente invention peut s'exprimer par le fait que l'on cherche à réaliser un dispositif de suralimentation temporaire en puissance pour organe électrique automobile de forte puissance, qui permette d'assurer les trois fonctions suivantes :

- suralimenter temporairement l'organe électrique de forte puissance,

- assurer une alimentation électrique de secours dans le cas d'une défaillance de l'alimentation principale, et

- garantir la qualité de tension du réseau de bord lors de l'activation de l'organe électrique de forte puissance.

Un autre but de la présente invention est de réaliser un nouveau dispositif de suralimentation temporaire en puissance pour des organes électriques automobiles de forte puissance, qui soit simple, fiable et qui puisse être installé sur des véhicules automobiles sans remettre en cause l'architecture desdits véhicules automobiles.

Pour atteindre ces buts, la présente invention fournit un nouveau dispositif de suralimentation temporaire en puissance d'organes électriques automobiles destiné à un réseau de bord électrique de véhicule comprenant une source d'énergie électrique (source d'énergie électrique principale) et au moins un organe électrique de forte puissance activé pendant de courtes périodes de temps. Ce nouveau dispositif comporte des éléments de stockage d'énergie électrique rechargeables, un moyen pour passer d'un premier état, dans lequel l'organe de forte puissance est alimenté directement par le réseau de bord et lesdits éléments de stockage d'énergie électrique rechargeables peuvent être rechargés par la source d'énergie électrique principale, à un second état, dans lequel, pendant lesdites courtes périodes de temps, l'organe de forte puissance est alimenté avec une puissance supérieure à celle délivrée dans le premier état.

Selon un mode préféré de réalisation de l'invention, les éléments de stockage d'énergie électrique rechargeables comportent une première et une seconde série d'éléments de stockage d'énergie électrique et, dans le second état, l'organe de forte puissance est alimenté par la première série d'éléments de stockage d'énergie en série avec la source d'énergie électrique principale, de manière à suralimenter l'organe de forte puissance.

Avec ce nouveau dispositif, lorsque la première série d'éléments de stockage d'énergie électrique est insuffisamment chargée, alors l'alimentation de l'organe de forte puissance par la source d'énergie électrique principale est coupée, la seconde série d'éléments de stockage d'énergie est mise en série avec la première série d'éléments de stockage d'énergie, et ainsi l'ensemble des éléments de stockage d'énergie électrique est en parallèle avec ledit organe de forte puissance pour suralimenter ce dernier.

Avec ce nouveau dispositif également, lorsque le réseau de bord est trop chargé, l'alimentation de l'organe de forte puissance par la source d'énergie électrique principale est alors coupée, la seconde série d'éléments de stockage d'énergie électrique est ainsi mise en série avec la première série d'éléments de stockage d'énergie électrique, et par conséquent l'ensemble des éléments de stockage d'énergie électrique est alors en parallèle avec l'organe de forte puissance pour suralimenter ce dernier.

Avec ce nouveau dispositif également, lorsque l'alimentation par la source d'énergie électrique principale du réseau de bord est défaillante, l'alimentation de l'organe de forte puissance par la source d'énergie électrique principale est alors coupée, la seconde série d'éléments de stockage d'énergie est ainsi mise en série avec la première série d'éléments de stockage d'énergie, et par conséquent l'ensemble des éléments de stockage d'énergie électrique est en parallèle avec l'organe de forte puissance pour suralimenter ce dernier.

La recharge des éléments de stockage d'énergie électrique est réalisée à partir de la source principale d'énergie électrique du réseau de bord. Elle peut être réalisée, de plus, à partir dudit organe électrique à forte puissance alimenté précédemment.

De préférence, les éléments de stockage d'énergie électrique rechargeables sont des supercondensateurs.

De préférence également, le nouveau dispositif comporte un moyen de régulation du courant de charge ou de recharge des éléments de stockage d'énergie électrique rechargeables, de manière à réduire les perturbations sur le réseau de bord du véhicule. Ce moyen de régulation peut être un transistor de type MOSFET commandé à une tension qui lui permet de se comporter comme une résistance variable.

De préférence également, la charge ou recharge des éléments de stockage d'énergie électrique rechargeables peut concerner la première série d'éléments de stockage d'énergie seulement, ou la seconde série d'éléments de stockage d'énergie seulement, ou bien les deux séries d'éléments de stockage d'énergie électrique simultanément.

De manière préférentielle, l'alimentation de l'organe de forte puissance par la source d'énergie principale est coupée ou établie au moyen d'une diode qui peut être commandée pour être « bloquée » ou « passante », respectivement.

De manière préférentielle également, la commutation de l'alimentation de l'organe de forte puissance par une partie des éléments de stockage d'énergie en série avec la source d'énergie électrique principale ou bien par tout ou partie des éléments de stockage d'énergie en parallèle avec ledit organe de forte puissance est réalisée au moyen de relais électromécaniques ou statique.

Selon le mode préféré de réalisation de l'invention, le nouveau dispositif de suralimentation comporte une commande qui permet de l'activer ou de le désactiver. Cette commande permet également d'activer le dispositif en ajoutant une source de tension en série ou bien une source de tension en parallèle à l'organe de forte de puissance.

Selon un mode préféré de réalisation de l'invention également, chaque élément de stockage d'énergie électrique rechargeable est un supercondensateur de tension unitaire 2,5 Volts, la seconde série d'éléments de stockage d'énergie électrique rechargeables comporte cinq éléments de stockage unitaires en série et la première série d'éléments de stockage d'énergie électrique rechargeables comporte un élément de stockage unitaire.

Selon la présente invention, le dispositif de suralimentation temporaire est positionné juste avant l'organe de forte puissance qu'il est destiné à suralimenter temporairement.

L'organe de forte puissance peut être un organe électrique automobile de type « liaison au sol », par exemple.

D'autres avantages et caractéristiques de l'invention apparaîtront dans la description qui suit d'exemples de réalisation de l'invention, non limitatifs de la portée de la présente invention, et accompagnée des dessins annexés dans lesquels :

- la figure 1 représente schématiquement les composants d'un réseau de bord classique d'un véhicule, avec un organe de forte puissance,

- la figure 2 représente schématiquement le réseau de bord automobile de la figure 1, dans lequel est inséré un dispositif de suralimentation temporaire en puissance (dispositif « S.T.E.P. ») selon la présente invention,

- la figure 3 représente schématiquement un mode de réalisation du dispositif de suralimentation temporaire en puissance de la présente invention,

- la figure 4 représente schématiquement l'état inactif du dispositif de suralimentation de la figure 3,

- la figure 5 représente schématiquement l'état actif du dispositif de suralimentation de la figure 3 en mode dit « suralimentation simple »,

- la figure 6 représente schématiquement l'état actif du dispositif de suralimentation de la figure 3 en mode dit « d'alimentation directe »,

- la figure 7 représente schématiquement une première méthode de recharge de l'élément de stockage d'énergie électrique du dispositif de suralimentation de la figure 3,

- la figure 8 représente schématiquement une deuxième méthode de recharge de l'élément de stockage d'énergie électrique du dispositif de suralimentation de la figure 3,

- la figure 9 représente schématiquement une troisième méthode de recharge de l'élément de stockage d'énergie électrique du dispositif de suralimentation de la figure 3,

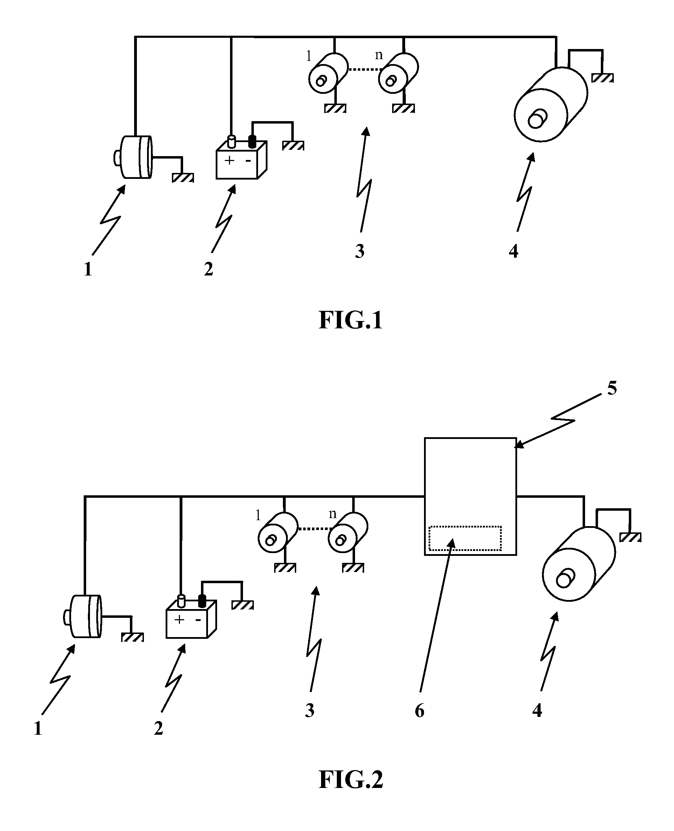

Sur le schéma de la figure 1, on a représenté une architecture de réseau de bord automobile de type classique. Le réseau comporte, de manière générale, une source d'énergie ou source de génération de tension et de courant (alternateur) désignée par la référence 1, un élément de stockage d'énergie qui peut être une batterie 2, et un certain nombre d'organes électriques (feux, écrans de tableau de bord, climatisation, etc.) et de faisceaux électriques qui assurent les liaisons entre tous ces éléments. On peut classer tous les organes électriques en deux catégories : d'une part, les organes électriques dits « sensibles », référencés 3, en nombre n sur la figure 1, dont le fonctionnement est sensible aux variations de la tension de réseau de bord, et d'autre part, les organes électriques de forte puissance, dont l'un est représenté schématiquement en 4, qui sont des organes électriques « perturbateurs » parce qu'ils génèrent des perturbations sur le réseau.

Les systèmes automobiles innovants ajoutent aux réseaux de bord des organes électriques de forte puissance, en réponse aux problèmes mécaniques traitant notamment de la liaison au sol et de la stabilité du véhicule automobile (direction, suspension, frein). C'est le cas, par exemple, des systèmes dits « X-by-wire », qui remplacent les traditionnelles liaisons mécaniques ou hydrauliques entre les commandes du conducteur et les mécanismes de direction et de freinage par divers actionneurs électromécaniques, des émulateurs de braquage des pédales et du volant, et un réseau distribué de modules de commande électriques.

Lors de certaines phases de fonctionnement, comme par exemple en butée au braquage pour une direction assistée électrique, les organes de forte puissance 4 atteignent les limites de ce que peut fournir le réseau de bord. Il peut en résulter une dégradation de la prestation de l'organe concerné et une surcharge en puissance du réseau de bord se traduisant par une tension aux bornes de l'organe très faible (< 11 volts).

Pour augmenter temporairement la tension aux bornes de l'organe de forte puissance 4 tout en préservant la tension du réseau de bord, il est prévu un dispositif de suralimentation temporaire en puissance - désigné également « S.T.E.P. » (pour Suralimentation Temporaire En Puissance)- représenté sur le schéma de la figure 2 par la référence générale 5. Ce dispositif 5 se positionne en série et au plus près possible de l'organe de forte puissance 4 pour lequel une suralimentation temporaire est nécessaire. Il comporte une commande 6, dont les fonctions seront décrites dans la suite du texte.

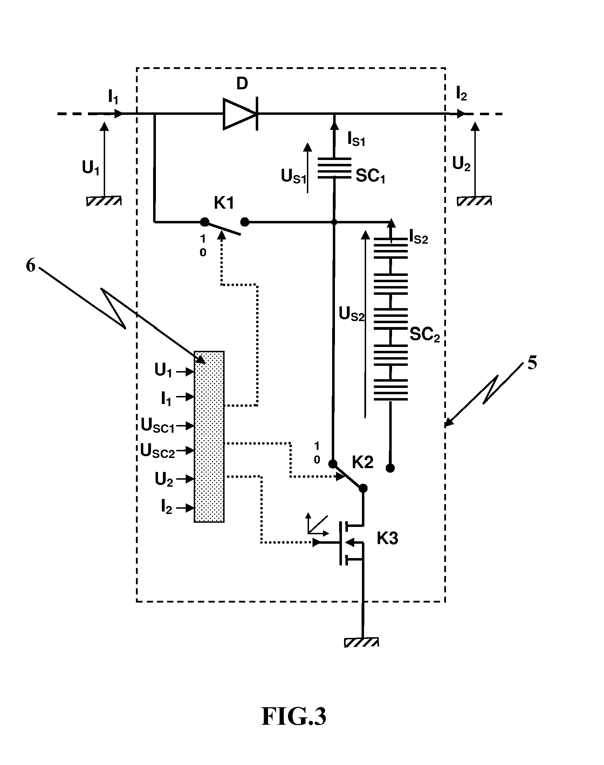

On a représenté sur la figure 3 le schéma électrique interne d'un exemple de réalisation du dispositif S.T.E.P. de référence 5.

Le dispositif 5 est composé d'interrupteurs de puissance, d'une diode D, de relais électromécaniques ou statiques référencés K1 et K2, ou à transistor à effet de champ (à grille) métal-oxyde (transistor dit « MOSFET » pour Metal Oxide Semiconductor Field Effect Transistor), de référence K3, et de supercondensateurs $SC_1$ et $SC_2$ de tension 2,5 V unitaire, soit environ 12,5 V au total pour le supercondensateur $SC_2$ de la figure 3. Dans l'exemple ici décrit, non limitatif de l'objet de la présente invention, $SC_1$ constitue une première série d'éléments de stockage d'énergie électrique qui comporte un seul élément unitaire, et $SC_2$ constitue une seconde série d'éléments de stockage d'énergie électrique qui comporte cinq éléments unitaires. $U_1$ et $I_1$ sont respectivement la tension et l'intensité à l'entrée du dispositif. $U_2$ et $I_2$ sont respectivement la tension et l'intensité à la sortie du dispositif. $U_{S1}$ et $I_{S1}$ sont respectivement la tension aux bornes et le courant traversant le supercondensateur $SC_1$. $U_{S2}$ et $I_{S2}$ sont respectivement la tension aux bornes et le courant traversant le supercondensateur $SC_2$.

Le dispositif 5 fonctionne de la manière suivante :

Lorsque le S.T.E.P. est inactif, les interrupteurs K1 et K3 sont ouverts. La diode D est passante et le réseau de bord (source de génération de tension et de courant 1 et élément de stockage d'énergie 2) alimente normalement l'organe de forte puissance 4. Les supercondensateurs $SC_1$ et $SC_2$ sont considérés chargés.

On a :

$$U_2 = U_1$$

$$I_2 = I_1$$

$$I_{s1} = 0$$

$$I_{s2} = 0$$

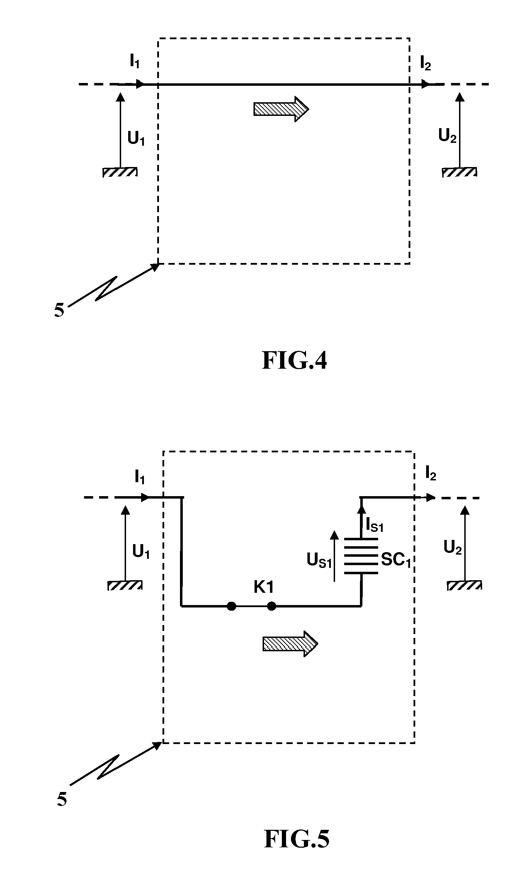

La figure 4 illustre cet état.

Lorsque la demande en puissance de l'organe de forte puissance 4 est forte ou que la tension du réseau de bord, et par conséquent la tension aux bornes de l'organe 4, est très faible (< 11 volts), la commande 6 décide d'activer le dispositif S.T.E.P. afin de suralimenter temporairement l'organe de forte puissance 4.

Deux modes de suralimentation peuvent être envisagés, qui sont d'une part le mode dit « de suralimentation simple » et, d'autre part, le mode dit « d'alimentation directe ».

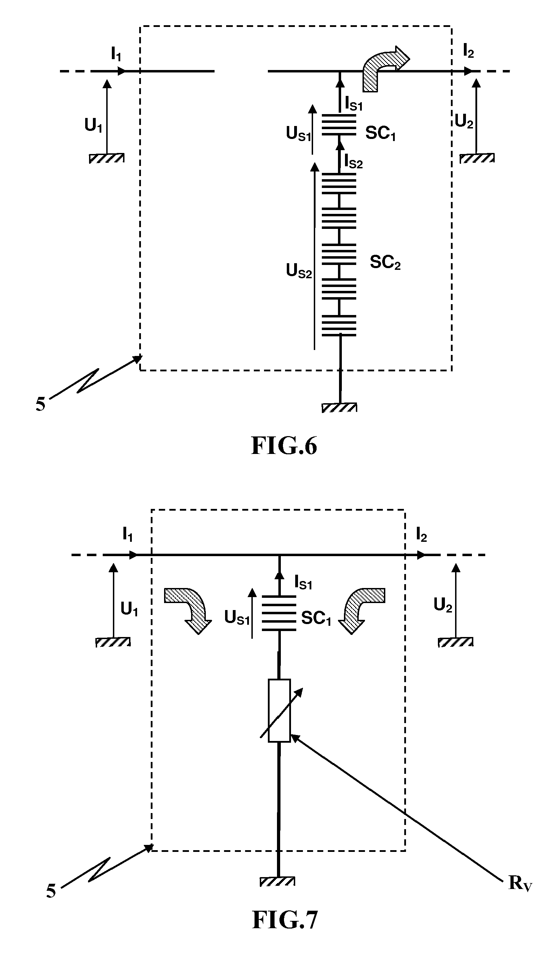

En se référant au schéma de la figure 5, le fonctionnement du mode de suralimentation simple est le suivant : l'interrupteur K1 se ferme, l'interrupteur K2 reste dans sa position et le relais à MOSFET, référencé K3, reste ouvert. Dans ces conditions, la diode D se bloque et le supercondensateur $SC_1$ est mis en série avec la batterie principale amenant ainsi une augmentation de la tension de sortie du dispositif (typiquement $U_{S1}$ = 2,5 V pour un seul supercondensateur).

On a :

$$U_2 = U_1 + U_{s1}$$

$$I_2 = I_1 = I_{s1}$$

Le second mode dit d'alimentation directe est illustré par le schéma électrique de la figure 6.

Lorsque le consommateur doit être activé mais que le supercondensateur $SC_1$ se trouve déchargé ou que le réseau de bord est déjà trop chargé ou encore que l'alimentation principale est défaillante (perte d'alimentation), la commande 6 active la mise en série de tous les supercondensateurs, à savoir $SC_1$ et $SC_2$, en ouvrant l'interrupteur K1 basculant K2 et fermant K3. Le pack de supercondensateurs se trouve ainsi en parallèle avec l'organe consommateur d'énergie 4.

On a :

$$U_1 = U_{batterie}$$

$$I_1 = 0$$

$$I_{s1} = I_{s2} = I_2$$

$$U_2 = U_{s1} + U_{s2} > U_1$$

Ce mode permet d'alimenter temporairement (pendant quelques dizaines de secondes) l'organe de forte puissance 4 tant que le pack de supercondensateurs dispose d'une tension suffisante à ses bornes permettant à ce dernier de fonctionner normalement puis dans un mode dégradé. L'automobiliste peut, de cette façon, sortir d'une situation dangereuse lorsque l'alimentation principale est coupée.

De la manière précédemment décrite, le dispositif selon la présente invention, sous l'action de la commande 6, a permis d'ajouter une source de tension supplémentaire en série (figure 5) ou en parallèle (figure 6) avec l'organe de forte puissance 4.

Le dispositif S.T.E.P. ayant été utilisé pour suralimenter l'organe 4 jusqu'à la décharge complète du ou des supercondensateurs $SC_1$ et $SC_2$, il faut alors le recharger. Le courant de recharge peut venir du réseau de bord ou de l'organe de forte puissance 4 qui a été alimenté précédemment.

Plusieurs procédés de recharge des supercondensateurs sont envisageables, selon la présente invention.

Un premier procédé de recharge, illustré sur le dessin de la figure 7, consiste à recharger le supercondensateur $SC_1$. L'interrupteur K1 est ouvert tandis que l'interrupteur K3 se ferme, la diode D est alors passante et voit transiter le courant de recharge du supercondensateur $SC_1$. Dans le but de réguler le courant de recharge, le MOSFET (K3) est commandé à une tension qui lui permet de se comporter comme une résistance variable Rv. Le courant de recharge est donc régulé afin de réduire les perturbations sur le réseau de bord du véhicule. Ainsi, ce courant sera plus ou moins important suivant l'état du réseau de bord et le nombre d'organes consommateurs d'énergie activés à ce moment. Il est donc possible de recharger en quelques secondes ou en quelques dizaines de secondes.

On a:

$$-I_{s1} = I_1 \text{ ou} = -I_2$$

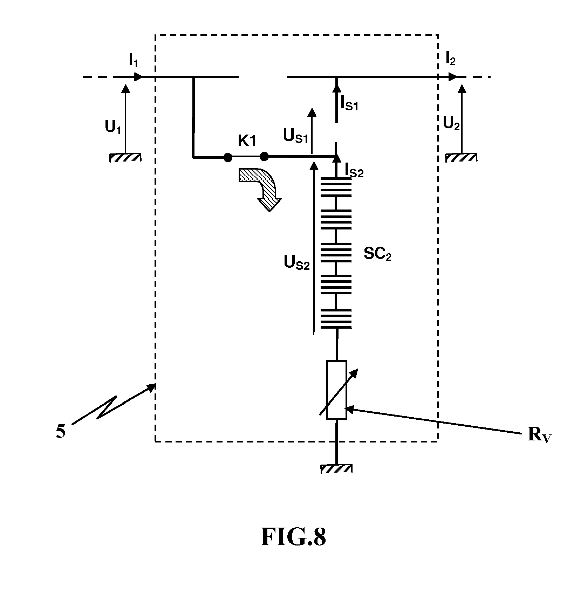

Un second procédé, illustré sur le dessin de la figure 8, consiste à recharger seulement le pack $SC_2$ de supercondensateurs. On ferme les interrupteurs ou relais K1 et K3 en régulant le courant transitant à travers K3 et basculant le relais K2. Du fait d'une tension sur sa cathode supérieure à celle sur son anode, la diode D est bloquée. Durant cette phase, représentée sur la figure 8, l'organe de forte puissance 4 est inactif.

On a :

$$-I_{s2} = I_1$$

$$I_{s1} = I_2 = 0$$

Une fois les supercondensateurs rechargés, le S.T.E.P. 5 repasse en mode inactif et les interrupteurs ou relais reprennent leur état initial.

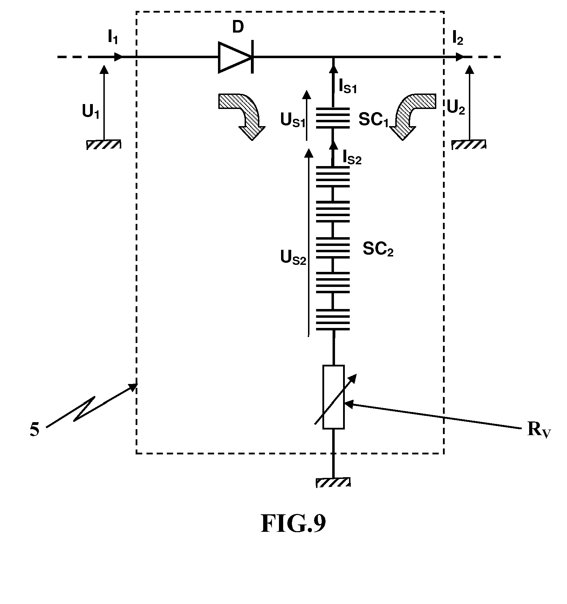

Un troisième procédé, illustré sur le dessin de la figure 9, consiste à recharger les supercondensateurs $SC_1$ et $SC_2$. On ouvre l'interrupteur K1, on bascule K2 et on régule le courant transitant à travers K3 pour ne pas dégrader la qualité du réseau de bord.

On a :

$$-I_{s1} = -I_{s2} = I_1 \text{ ou } = -I_2$$

Une fois les supercondensateurs rechargés, le S.T.E.P. 5 repasse en mode inactif et les interrupteurs ou relais reprennent leur état initial.

La présente invention, telle que décrite ci-dessus, réalise un dispositif de suralimentation destiné à l'organe automobile de forte puissance 4 de la figure 2. Ce nouveau dispositif, de référence générale 5, associé à un bloc de commande 6, s'insère dans l'architecture illustrée par le schéma de la figure 1, en série avec - et au plus près de - l'organe de forte puissance 4.

Comme déjà exposé précédemment, le nouveau dispositif de suralimentation 5 permet d'assurer les fonctions suivantes :

- il fournit une suralimentation temporaire en puissance à l'organe électrique de forte puissance 4. Ainsi, le dispositif de suralimentation 5 fournit aux bornes de l'organe 4 une puissance électrique et une tension supérieures à celles de son fonctionnement nominal, tout en restant dans des limites acceptables par l'organe 4. Ce « boost » de puissance temporaire (de l'ordre de quelques secondes ou de quelques dizaines de secondes) autorise ainsi l'organe de forte puissance 4 à passer les points « durs » de fonctionnement et maintient un niveau de prestation et de performances optimal,

- il alimente électriquement l'organe de forte puissance 4, même en cas de perte de l'alimentation principale ; il devient, de cette façon, une alimentation de secours dédiée,

- il assure le respect de la qualité de la tension du réseau de bord à tout moment lors du fonctionnement, et plus particulièrement lors de la recharge du (ou des) supercondensateur(s). Le dispositif de suralimentation 5 évalue et régule la dynamique et l'amplitude maximales du courant de recharge acceptable par le réseau de bord. De cette façon, le dispositif 5 impose une tension du réseau de bord stable et un courant délivré par le réseau de bord dans la limite de la capacité du réseau avec des dynamiques et des amplitudes faibles.

Les instants de commutation des interrupteurs et relais et des éléments constituants le dispositif 5 sont pilotés par le bloc de commande 6. De plus, le bloc de commande 6 prend en compte les tensions et intensités de courant en aval et en amont afin de recharger correctement l'élément de stockage sans perturber le réseau de bord.

## Revendications

1. Dispositif de suralimentation temporaire en puissance d'organes électriques automobiles destiné à un réseau de bord électrique de véhicule comprenant une source d'énergie électrique principale (2) et au moins un organe électrique de forte puissance (4) activé pendant de courtes périodes de temps, **caractérisé en ce qu'**il comporte des éléments de stockage d'énergie électrique rechargeables ($SC_1$, $SC_2$), un moyen pour passer d'un premier état, dans lequel l'organe de forte puissance (4) est alimenté directement par le réseau de bord et lesdits éléments de stockage d'énergie électrique rechargeables ($SC_1$, $SC_2$) peuvent être rechargés par la source d'énergie électrique principale (2), à un second état, dans lequel, pendant lesdites courtes périodes de temps, l'organe de forte puissance (4) est alimenté avec une puissance supérieure à celle délivrée dans le premier état ;
et **en ce que** lesdits éléments de stockage d'énergie électrique rechargeables ($SC_1$, $SC_2$) comportent une première ($SC_1$) et une seconde ($SC_2$) séries d'éléments de stockage d'énergie et **en ce que**, dans ledit second état, l'organe de forte puissance (4) est alimenté par ladite première série d'éléments de stockage d'énergie ($SC_1$) en série avec la source d'énergie électrique principale (2), de manière à suralimenter ledit organe de forte puissance (4).

2. Dispositif de suralimentation temporaire en puissance selon la revendication 1, **caractérisé en ce que**, lorsque ladite première série d'éléments de stockage d'énergie ($SC_1$) est insuffisamment chargée, l'alimentation de l'organe de forte puissance (4) par la source d'énergie principale (2) est coupée, la seconde série d'éléments de stockage d'énergie ($SC_2$) est mise en série avec la première série d'éléments de stockage d'énergie ($SC_1$), l'ensemble des éléments de stockage d'énergie ($SC_1$, $SC_2$) étant alors en parallèle avec ledit organe de forte puissance (4) pour suralimenter ce dernier.

3. Dispositif de suralimentation temporaire en puissance selon l'une quelconque des revendications 1 et 2, **caractérisé en ce que**, le réseau de bord étant trop chargé, l'alimentation de l'organe de forte puissance (4) par la source d'énergie principale (2) est coupée, la seconde série d'éléments de stockage

d'énergie (SC$_2$) est mise en série avec la première série d'éléments de stockage d'énergie (SC$_1$), l'ensemble des éléments de stockage d'énergie (SC$_1$, SC$_2$) étant alors en parallèle avec ledit organe de forte puissance (4) pour suralimenter ce dernier.

4. Dispositif de suralimentation temporaire en puissance selon l'une quelconque des revendications 1 et 2, **caractérisé en ce que**, l'alimentation par la source d'énergie principale du réseau de bord étant défaillante, l'alimentation de l'organe de forte puissance (4) par la source d'énergie principale (2) est coupée, la seconde série d'éléments de stockage d'énergie (SC$_2$) est mise en série avec la première série d'éléments de stockage d'énergie (SC$_1$), l'ensemble des éléments de stockage d'énergie (SC$_1$, SC$_2$) étant alors en parallèle avec ledit organe de forte puissance (4) pour suralimenter ce dernier.

5. Dispositif de suralimentation temporaire en puissance selon l'une quelconque des revendications 1 à 4, **caractérisé en ce que** la recharge des éléments de stockage d'énergie (SC$_1$, SC$_2$) est réalisée à partir de la source principale d'énergie du réseau de bord (2).

6. Dispositif de suralimentation temporaire en puissance selon l'une quelconque des revendications 1 à 5, **caractérisé en ce que** la recharge des éléments de stockage d'énergie (SC$_1$, SC$_2$) est réalisée, de plus, à partir dudit organe électrique à forte puissance alimenté précédemment.

7. Dispositif de suralimentation temporaire en puissance selon l'une quelconque des revendications 1 à 6, **caractérisé en ce que** lesdits éléments de stockage d'énergie (SC$_1$, SC$_2$) rechargeables sont des supercondensateurs.

8. Dispositif de suralimentation temporaire en puissance selon l'une quelconque des revendications 1, et 5 à 7, **caractérisé en ce qu'**il comporte un moyen de régulation du courant de charge ou de recharge desdits éléments de stockage d'énergie (SC$_1$, SC$_2$) rechargeables, de manière à réduire les perturbations sur le réseau de bord du véhicule.

9. Dispositif de suralimentation temporaire en puissance selon l'une quelconque des revendications 1, et 5 à 8, **caractérisé en ce que** la charge ou recharge des éléments de stockage d'énergie (SC$_1$, SC$_2$) rechargeables peut concerner la première série (SC$_1$) d'éléments de stockage seulement, ou la seconde série (SC$_2$) d'éléments de stockage seulement, ou bien les deux séries (SC$_1$, SC$_2$) simultanément.

10. Dispositif de suralimentation temporaire en puissance selon la revendication 8, **caractérisé en ce que** ledit moyen de régulation du courant de charge ou de recharge des éléments de stockage d'énergie (SC$_1$, SC$_2$) rechargeables est un transistor de type MOSFET commandé à une tension qui lui permet de se comporter comme une résistance variable (Rv).

11. Dispositif de suralimentation temporaire en puissance selon l'une quelconque des revendications 2, 3 et 4, **caractérisé en ce que** l'alimentation de l'organe de forte puissance (4) par la source d'énergie principale (2) est coupée ou établie au moyen d'une diode (D) qui peut être commandée pour être bloquée ou passante, respectivement.

12. Dispositif de suralimentation temporaire en puissance selon l'une quelconque des revendications 1 et 2, **caractérisé en ce que** la commutation de l'alimentation de l'organe de forte puissance (4) par une partie des éléments de stockage d'énergie (SC$_1$) en série avec la source d'énergie électrique principale (2) ou bien par tout ou partie des éléments de stockage d'énergie (SC$_1$, SC$_2$) en parallèle avec ledit organe de forte puissance (4) est réalisée au moyen de relais électromécaniques ou statiques (K1, K2, K3).

13. Dispositif de suralimentation temporaire en puissance selon l'une quelconque des revendications 1 à 12, **caractérisé en ce qu'**il comporte une commande (6) qui permet d'activer ou désactiver le dispositif (5).

14. Dispositif de suralimentation temporaire en puissance selon la revendication 13, **caractérisé en ce que** ladite commande (6) permet également d'activer le dispositif (5) en ajoutant une source de tension en série ou bien une source de tension en parallèle audit organe de forte de puissance (4).

15. Dispositif de suralimentation temporaire en puissance selon la revendication 7, **caractérisé en ce que** chaque élément de stockage d'énergie électrique rechargeable (SC$_1$, SC$_2$) est un supercondensateur de tension unitaire 2,5 Volts.

16. Dispositif de suralimentation temporaire en puissance selon l'une quelconque des revendications 1 à 4, 7 et 15, **caractérisé en ce que** ladite seconde série d'éléments de stockage d'énergie électrique rechargeables (SC$_2$) comporte cinq éléments de stockage unitaires en série.

17. Dispositif de suralimentation temporaire en puissance selon l'une quelconque des revendications 1 à 4, 7 et 15, **caractérisé en ce que** ladite première série d'éléments de stockage d'énergie électrique rechargeables (SC$_1$) comporte un élément de stockage unitaire.

18. Dispositif de suralimentation temporaire en puissance selon l'une quelconque des revendications 1 à 17, **caractérisé en ce qu'**il est positionné juste avant l'organe de forte puissance (4) qu'il est destiné à suralimenter temporairement.

19. Dispositif de suralimentation temporaire en puissance selon l'une quelconque des revendications 1 à 18, **caractérisé en ce que** ledit organe de forte puissance (4) est un organe électrique automobile de type « Liaison au Sol ».

**FIG.1**

**FIG.2**

**FIG.3**

$I_1$

$I_2$

$U_1$

$U_2$

5

**FIG.4**

$I_1$

$I_2$

$U_1$

$I_{S1}$

$U_{S1}$

$SC_1$

$U_2$

**K1**

5

**FIG.5**

**FIG.6**

**FIG.7**

**FIG.8**

**FIG.9**

**EP 1 848 090 A2**

## RÉFÉRENCES CITÉES DANS LA DESCRIPTION

**Documents brevets cités dans la description**

- EP 1120880 A2
- WO 9944269 A
- US 20020140293 A1
- US 4145618 A
- WO 2004070911 A1
- FR 2687511